Europäisches Patentamt

European Patent Office

Office européen des brevets

(11) Veröffentlichungsnummer: **0 458 102 A1**

## EUROPÄISCHE PATENTANMELDUNG

(21) Anmeldenummer: 91107151.2

(51) Int. Cl.⁵: **B60R 21/32**

(22) Anmeldetag: 03.05.91

(30) Priorität: 23.05.90 DE 4016610

(43) Veröffentlichungstag der Anmeldung:
27.11.91 Patentblatt 91/48

(84) Benannte Vertragsstaaten:
**DE FR GB SE**

(71) Anmelder: **AUDI AG**
**Postfach 2 20**
**W-8070 Ingolstadt(DE)**

(72) Erfinder: **Der Erfinder hat auf seine Nennung**
**verzichtet**

(74) Vertreter: **Engelhardt, Harald**
**Audi AG Postfach 2 20**
**W-8070 Ingolstadt(DE)**

(54) Sicherheitseinrichtung an einem Kraftfahrzeug mit einem aufblasbaren Gaskissen.

(57) Die Erfindung betrifft eine Sicherheitseinrichtung an einem Kraftfahrzeug mit einem aufblasbaren Gaskissen, das einem Fahrzeugsitz, insbesondere einem Beifahrersitz (2), zugeordnet ist. Der Fahrzeugsitz (2) enthält einen Sitzschalter (6), mit dem die Anwesenheit oder Abwesenheit eines sitzenden Fahrzeuginsassen ermittelt wird. Bei der Abwesenheit eines Fahrzeuginsassen erfolgt keine Auslösung des zugeordneten Gaskissens. Erfindungsgemäß ist im Bodenbereich (9) vor dem Fahrzeugsitz (2) ein weiterer Schalter als Fußraumschalter (10) angeordnet, der die Anwesenheit oder Abwesenheit eines stehenden, knienden oder sitzenden Fahrzeuginsassen, z.B. eines Kindes, im Bereich vor dem Fahrzeugsitz (2) ermittelt. Ein dem Fahrzeugsitz (2) zugeordnetes Gaskissen soll aktiviert werden, wenn der Sitzschalter (6) und/oder der Fußraumschalter (10) durch einen Fahrzeuginsassen betätigt sind.

FIG.1

EP 0 458 102 A1

Die Erfindung betrifft eine Sicherheitseinrichtung an einem Kraftfahrzeug mit einem aufblasbaren Gaskissen nach dem Oberbegriff des Anspruchs 1.

Es ist bekannt, ein aufblasbares Gaskissen dem Fahrersitz zuzuordnen und unter einer Lenkradprallplatte anzuordnen. Es ist jedoch auch bekannt, den weiteren Fahrzeugsitzen, insbesondere dem vorderen Beifahrersitz, ein aufblasbares Gaskissen zuzuordnen und dieses jeweils bei einem starken Aufprall, der von einem Beschleunigungssensor ermittelt wird, durch Zünden einer Treibladung aufzublasen.

Wenn ein solcher Beifahrersitz jedoch nicht besetzt ist, ist das Auslösen eines zugeordneten Gaskissens sicherheitstechnisch umsonst und ungünstig. Durch das umsonst aufgeblasene und funktionslose Gaskissen ergibt sich für den Fahrer und eventuelle andere Fahrzeuginsassen ein zusätzlicher Druckanstieg im Fahrzeuginnenraum, der schädlich sein kann und nicht erforderlich ist. Zudem ergeben sich bei der Auslösung eines Beifahrer-Gaskissens ohne Anwesenheit eines Beifahrers erhebliche und unnötige Reparaturkosten für die Wiederherstellung des Systems, insbesondere wenn das Beifahrer-Gaskissen in anderen Fahrzeugteilen, z.B. der Armaturentafel, integriert ist und dort an Sollbruchstellen Teile abgerissen oder aufgerissen werden. Bei Unfällen leichterer Art mit vertretbaren Reparaturkosten können diese beim nicht erforderlichen Auslösen eines Beifahrer-Gaskissensystems so hoch werden, daß sich z.B. ein wirtschaftlicher Gesamtfahrzeug-Totalschaden ergibt.

Es ist daher bekannt (DE-OS 21 34 590; DE-OS 37 02 825), an den Beifahrersitzen einen Sitzkontaktschalter anzuordnen, der mechanisch auf das Gewicht einer sitzenden Person anspricht und wodurch die Anwesenheit oder Abwesenheit eines Fahrzeuginsassen auf dem jeweiligen Sitz ermittelt wird. Ein solcher Sitzkontaktschalter ist ebenfalls mit der Steuereinrichtung zur Auslösung des zugeordneten Gaskissens verbunden, wobei dieses nur dann ausgelöst wird, wenn ein Fahrzeuginsasse auf dem Sitz vom Sitzkontaktschalter ermittelt wird.

In einer weiter bekannten Sicherheitseinrichtung (DE-OS 25 16 185) ist ebenfalls ein entsprechender Sitzkontaktschalter gezeigt. Wenn der Sitzkontaktschalter einen leeren Sitz ermittelt, wird aber hier das Gaskissen dennoch angesteuert und aufgeblasen, jedoch nur bis zu einem verringerten Volumen.

Bei den vorbeschriebenen Systemen müssen zur Aktivierung eines Beifahrer-Gaskissens somit zwei Bedingungen gleichzeitig erfüllt sein: Erstens muß eine entsprechende, äußere Unfallschwere vorliegen, die einem Schwellwert für das Signal des Beschleunigungssensors entspricht. Zweitens muß ein Fahrzeuginsasse den jeweiligen Fahrzeugsitz besetzt haben, wodurch der Sitzkontaktschalter angesprochen hat.

In den Fällen, in denen ein zu schützender Fahrzeuginsasse vor seinem Sitz steht, wie dies bei Kindern häufig ist, kniet oder sitzt, spricht der Sitzkontaktschalter nicht an, so daß bei einem Aufprall das Gaskissen nicht auslöst und damit das Schutzsystem nicht wirksam ist.

Sitzkontaktschalter, die mechanisch durch das Körpergewicht einer sitzenden Person ansprechen (DE-PS 38 05 887), bestehen beispielsweise aus einer Schaltmatte mit zwei durch eine elastisch verformbare, elektrisch isolierende Zwischenlage getrennte Kontaktlagen. Diese sind elektrisch leitend, kommen durch eine elastische Verformung durch das Körpergewicht einer sitzenden Person zur Anlage und wirken somit als Schalt kontakte.

Es sind jedoch auch berührungslos arbeitende Sitzschalter bekannt (DE-OS 36 35 644). Dazu werden zwei gegenüberliegend am Sitz angebrachte Elektroden verwendet, zwischen denen ein elektrisches Feld angelegt ist. Ein so gebildeter Kondensator ändert bei der Anwesenheit einer Person auf dem Sitz seine Kapazität. Durch Erfassung dieser Kapazitätsänderung kann die Anwesenheit oder Abwesenheit einer Person auf dem Sitz bestimmt werden.

Es ist auch bekannt (DE-OS 38 09 074), unterschiedliche Sitzpositionen bzw. Schwerpunktlagen eines Fahrzeuginsassen, z.B. eine vorgebeugte Haltung, durch mehrere, am Sitz angeordnete Drucksensoren zu bestimmen und ein zugeordnetes, aufblasbares Gaskissen der jeweiligen Sitzposition entsprechend anzusteuern und angepaßt aufzublasen.

In einer weiter bekannten Einrichtung zur Erkennung, ob ein Fahrzeugsitz besetzt ist, wird kein dem Sitz zugeordneter Sitzschalter verwendet, sondern ein Entfernungsmeßsensor. Dieser ist beispielsweise an der Armaturentafel angeordnet und arbeitet nach dem Impuls-Echo-Laufzeitverfahren, indem Impulse ausgesandt werden und diese entweder von der Sitzlehne bei einem leeren Sitz oder von einem Fahrzeuginsassen von dessen Bauch- oder Brustbereich reflektiert werden. Die Laufzeit und damit die vom Sensor gemessene Entfernung ist somit bei einem besetzten Fahrzeugsitz geringer als ein auswertbarer Wert für die Bestimmung der Anwesenheit oder Abwesenheit einer Person. Ein solches System ist jedoch sehr aufwendig, da auch die jeweilige Sitzeinstellung (Längseinstellung und Lehnenneigung) über weitere Sensoren erfaßt und bei der Auswertung berücksichtigt werden muß.

Mit einem solchen Impuls-Echo-Laufzeitverfahren ist bei einer entsprechenden Anordnung des Entfernungsmeßsensors auch eine Aussage möglich, ob der Bereich vor dem Sitz, bei ansonsten leerem Sitz, durch eine stehende, kniende oder sitzende Person eingenommen ist. Das hier beschriebene Verfahren ist jedoch aufgrund hoher Herstellungs- und Montagekosten teuer.

Die Aufgabe der Erfindung wird darin gesehen, mit einfachen Mitteln einen Schutz mit einem aufblasbaren Gaskissen auch dann zu bewirken, wenn ein Fahrzeuginsasse sich vor einem zugeordneten Fahrzeugsitz befindet und über einen Sitzschalter ein leerer Sitz ermittelt wird.

Diese Aufgabe wird mit den Merkmalen des Anspruchs 1 gelöst.

Bei der Gattungsbildung des Anspruchs 1 wurde von einer Sicherheitseinrichtung ausgegangen, die einen Verzögerungssensor enthält, der die Richtung und Größe eines Aufpralls des Fahrzeugs und damit eines Auslösefalls für das Gaskissensystem ermittelt und weiter einen Sitzschalter an einem Fahrzeugsitz enthält, der die Anwesenheit oder Abwesenheit eines sitzenden Fahrzeuginsassen bestimmt. Der Sensor und der Sitzschalter sind an eine Steuereinrichtung angeschlossen, die beim Ansprechen des Sensors und bei der Ermittlung eines sitzenden Fahrzeuginsassen die Zündung der Treibladung des zugeordneten Gaskissens aktiviert.

Erfindungsgemäß ist zudem im Bodenbereich vor dem Fahrzeugsitz ein weiterer Schalter als Fußraumschalter angeordnet, der die Anwesenheit oder Abwesenheit eines Fahrzeuginsassen im Bereich vor dem Fahrzeugsitz ermittelt. Auch dieser Fußraumschalter ist an die Steuereinrichtung angeschlossen, wobei diese die Zündung der Treibladung auch dann aktiviert, wenn der Sitzschalter die Abwesenheit eines Fahrzeuginsassen ermittelt, durch den Fußraumschalter aber eine Anwesenheit vor dem Fahrzeugsitz festgestellt wird.

Bevorzugt ist eine solche Einrichtung in Verbindung mit dem vorderen Beifahrersitz zum Schutz des Bereichs zwischen der Schalttafel und dem Beifahrersitz zu verwenden. Eine solche Anordnung ist aber auch in Verbindung mit den Rücksitzen bzw. für den Bereich zwischen den Rücksitzen und den Vordersitzen geeignet, wenn auch für die Rücksitze aufblasbare Gaskissen vorgesehen sind.

Mit der Erfindung wird vorteilhaft erreicht, daß auch ein Schutz für Personen im Bereich vor einem Fahrzeugsitz durch ein zugeordnetes, aufblasbares Gaskissen erhalten wird.

Eine Bedingung, zusätzlich zur Bedingung einer entsprechenden, äußeren Unfallschwere, besteht somit darin, daß entweder der Sitzschalter oder der Fußraumschalter oder beide Schalter angesprochen haben. Diese Bedingung kann nach Anspruch 2 einfach dadurch realisiert werden, daß beide Schalter elektrisch parallel geschaltet werden.

Zur Erfassung einer großen Standfläche vor dem jeweiligen Fahrzeugsitz wird nach Anspruch 3 vorgeschlagen, den Fußraumschalter als flächiges, plattenförmiges oder mattenförmiges Element auszubilden.

Nach Anspruch 4 kann ein solches Element je nach den vorliegenden Gegebenheiten unter einem Bodenteppich angebracht werden oder in einen solchen auch integriert sein.

In einer einfachen und kostengünstigen Ausführung nach Anspruch 5 kann der Fußraumschalter als an sich bekannte Kontaktmatte ausgeführt sein, die durch das Gewicht eines Fahrzeuginsassen betätigt wird.

Differenziertere Analysen, ob beispielsweise der Bereich vor einem Fahrzeugsitz durch eine Person oder evtl. ein Gepäckstück (keine Auslösung des Gaskissens) eingenommen wird, sind möglich mit den Merkmalen des Anspruchs 6. Es wird dort angeregt, Kraft- und/oder Druckmeßeinrichtungen zu verwenden, mit denen nicht nur eine Ja-Nein-Aussage möglich ist. Insbesondere sind durch die Auswertung von Kraft- und/oder Druckverteilmustern gemäß Anspruch 7 genauere Unterscheidungen zwischen Personen und Gepäckstücken möglich.

In einer anderen, je nach den vorliegenden Gegebenheiten verwendbaren Ausführungsform wird ein kontaktlos arbeitender Fußraumschalter in der Form von bevorzugt in den Fußbodenteppich eingearbeiteten Metallgittern oder Metallschleifen vorgeschlagen. Damit kann über Änderungen magnetischer oder elektrischer Felder eine Bestimmung über die Abwesenheit oder Anwesenheit einer Person durchgeführt werden.

Nach Anspruch 9 ist es vorteilhaft, wenn diese Metallgitter oder Metallschleifen in den seitlich hochgezogenen Fußbodenteppichbereich mit eingearbeitet werden.

Wenn die Abwesenheit eines Fahrzeuginsassen im Bereich eines Fahrzeugsitzes durch die zugeordneten Schalter und Sensoren nicht eindeutig detektiert wird, ist die Steuereinrichtung so auszulegen, daß das zugeordnete Gaskissen beim Vorliegen eines Auslösefalls durch eine entsprechende, äußere Unfallschwere in jedem Fall aufgeblasen wird. Dies kann beispielsweise durch eine entsprechende Software sichergestellt werden.

Anhand einer Zeichnung wird ein Ausführungsbeispiel der Erfindung mit weiteren Merkmalen, Einzelheiten und Vorteilen näher erläutert.

Die einzige Fig. zeigt eine schematische Darstellung eines Fahrzeugsitzes mit einem Sitzschalter und einem Fußraumschalter.

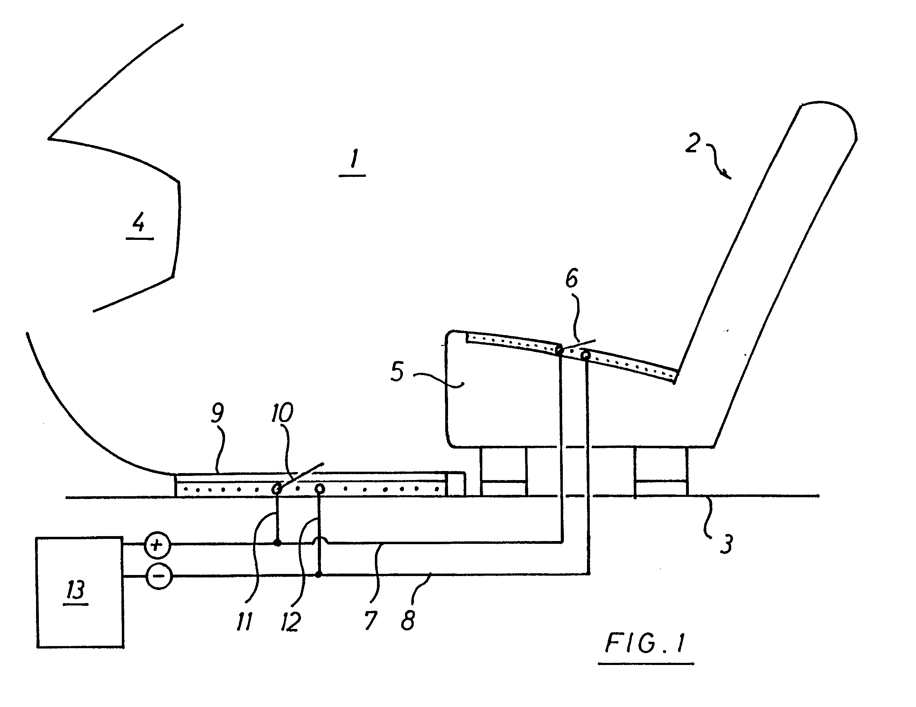

In Fig. 1 ist schematisch ein Blick in einen Fahrzeuginnenraum 1 dargestellt mit einem Beifahrersitz 2, der auf einem Fahrzeugboden 3 befestigt ist und mit einer Schalttafel 4, in der vor den Beifahrersitz 2 und diesem zugeordnet ein (nicht dargestelltes) aufblasbares Gaskissen angeordnet sein soll.

In der Sitzfläche 5 des Beifahrersitzes 2 ist eine an sich bekannte Schaltmatte angebracht, wie dies schematisch durch den Sitzkontaktschalter 6 dargestellt ist. Der Sitzkontaktschalter 6 liegt in einem elektrischen Stromkreis, bestehend aus den Leitungen 7 und 8.

Im Bereich vor dem Beifahrersitz 2 ist ein Fußbodenteppich 9 verlegt, unter dem eine weitere Schaltmatte angebracht ist, wie dies schematisch durch einen Fußraumschalter 10 dargestellt ist. Der Fußraumschalter 10 ist über Leitungen 11, 12 parallel zum Sitzkontaktschalter 6 geschaltet.

Der elektrische Stromkreis mit den Leitungen 7, 8 bzw. 11, 12 ist an eine Steuereinrichtung 13 angeschlossen, mit der über ein entsprechendes Sensorprogramm das dem Beifahrersitz 2 zugeordnete Gaskissen aktiviert wird.

Die dargestellte Anordnung hat folgende Funktion: Als erste Bedingung für die Aktivierung des Gaskissens und die Zündung der entsprechenden Treibladung ist eine bestimmte Stärke eines Aufpralls des Fahrzeugs erforderlich, wie dies mit einem (nicht dargestellten) Beschleunigungsaufnehmer detektiert wird.

Die zweite Bedingung für die Aktivierung des Gaskissens besteht darin, daß der Sitzkontaktschalter 6 und/oder der Fußraumschalter 10 geschlossen sind bzw. der durch die Leitungen 7, 8 bzw. 11, 12 gebildete Stromkreis geschlossen ist. Diese Bedingung ist dann erfüllt, wenn entweder ein Fahrzeuginsasse auf der Sitzfläche 5 sitzt (Sitzkontaktschalter 6 geschlossen) oder im Bereich zwischen Beifahrersitz 2 und Schalttafel 4 auf dem Fußboden steht, kniet oder sitzt (Fußraumschalter 10 geschlossen). Damit wird auch für den letzten Fall (Fußraumschalter 10 geschlossen) ein Schutz durch das zugeordnete Gaskissen erreicht.

**Patentansprüche**

1. Sicherheitseinrichtung an einem Kraftfahrzeug mit einem aufblasbaren Gaskissen,

     mit einem Fahrzeugsitz, dem das Gaskissen zugeordnet und vor dem dieses aufblasbar ist,

     mit einer zündbaren Treibladung zur Erzeugung des Gasvolumens zum Aufblasen des Gaskissens,

     mit einem Sensor, insbesondere einem Verzögerungssensor, der Richtung und Größe eines Aufpralls des Fahrzeugs und damit eines Auslösefalls für das Gaskissen ermittelt,

     mit einem Sitzschalter am Fahrzeugsitz, der die Anwesenheit oder Abwesenheit eines sitzenden Fahrzeuginsassen ermittelt und

     mit einer Steuereinrichtung, an die der Sensor und der Sitzschalter angeschlossen sind und die beim Ansprechen des Sensors und bei Ermittlung eines sitzenden Fahrzeuginsassen die Zündung der Treibladung aktiviert,

     dadurch gekennzeichnet,

     daß im Bodenbereich (9) vor dem Fahrzeugsitz (2) ein weiterer Schalter als Fußraumschalter (10) angeordnet ist, der die Anwesenheit oder Abwesenheit eines Fahrzeuginsassen im Bereich vor dem Fahrzeugsitz (2) ermittelt,

     daß durch die Steuereinrichtung (13) die Zündung der Treibladung auch dann aktiviert wird, wenn der Fußraumschalter (10) die Anwesenheit eines Fahrzeuginsassen ermittelt.

2. Sicherheitseinrichtung nach Anspruch 1, dadurch gekennzeichnet, daß der Sitzschalter (6) und der Fußraumschalter (10) elektrisch parallel geschaltet sind.

3. Sicherheitseinrichtung nach Anspruch 1 oder 2, dadurch gekennzeichnet, daß der Fußraumschalter (10) als flächiges, plattenförmiges oder mattenförmiges Element im Fahrzeugboden vor dem Fahrzeugsitz (2) ausgebildet ist.

4. Sicherheitseinrichtung nach einem der Ansprüche 1 bis 3, dadurch gekennzeichnet, daß der Fußraumschalter (10) unter oder in einem Bodenteppich (9) angeordnet ist.

5. Sicherheitseinrichtung nach einem der Ansprüche 1 bis 4, dadurch gekennzeichnet, daß der Fußraumschalter (10) aus wenigstens zwei elastisch im Abstand gehaltenen Schaltkontakten bzw. Kontaktmatten besteht, die durch das Gewicht eines Fahrzeuginsassen zur Anlage gebracht werden.

6. Sicherheitseinrichtung nach einem der Ansprüche 1 bis 4, dadurch gekennzeichnet, das der Fußraumschalter (10) wenigstens eine Kraft und/oder Druckmeßeinrichtung enthält und ab einem bestimmten Schwellenwert eine Schaltung erfolgt.

7. Sicherheitseinrichtung nach Anspruch 6, dadurch gekennzeichnet, daß eine Erkennungseinrichtung für die Unterscheidung von Kraft- und/oder Druckverteilungsmustern vorgesehen ist.

8. Sicherheitseinrichtung nach einem der Ansprüche 1 bis 4, dadurch gekennzeichnet, daß ein kontaktlos arbeitender Fußraumschalter (10) in Form von bevorzugt in den Fußbodenteppich (9) eingearbeiteten Metallgittern oder Metallschleifen vorgesehen ist und Änderungen magnetischer oder elektrischer Felder erfaßt werden.

9. Sicherheitseinrichtung nach Anspruch 8, dadurch gekennzeichnet, daß die Metallgitter oder Metallschleifen in den seitlich hochgezogenen Fußbodenteppichbereichen mit eingearbeitet sind.

10. Sicherheitseinrichtung nach einem der Ansprüche 1 bis 9, dadurch gekennzeichnet, daß bei einem nicht eindeutigen Detektieren der Abwesenheit eines Fahrzeuginsassen im Bereich des Fahrzeugsitzes (2) durch die zugeordneten Schalter (6, 10) im durch die äußere Unfallschwere ermittelten Auslösefall das Gaskissen in jedem Fall aufgeblasen wird.

FIG.1

EP 0 458 102 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 357 225   (MAZDA MOTOR CORPORATION) <br> * Anspruch 1; Figuren 48-52 ** Spalte 17, Zeile 54 - Spalte 18, Zeile 56 * <br> — — — | 1,3-5,8 | B 60 R 21/32 |
| D,Y,A | DE-A-3 635 644   (AISIN SEIKI K.K.) <br> * Zusammenfassung ** Seite 6, Zeilen 32 - 47; Figuren 1a, 11a-11e ** Seite 11, Zeile 65 - Seite 12, Zeile 15 ** Figur 3c * <br> — — — | 1,8,9 | |
| P,Y | FR-A-2 641 747   (SARL M.T.B.S.) <br> * das ganze Dokument * <br> — — — | 1,3-5 | |
| D,A | DE-A-2 516 185   (NISSAN MOTOR CO.,LTD) <br> * Ansprüche ; Figur 3 * <br> — — — | 1,2 | |
| A | EP-A-0 161 895   (RAYCHEM LIMITED) <br> * Zusammenfassung ** Seite 14, Zeile 13 - Seite 16, Zeile 20 * <br> — — — — — | 6,7 | |

|  | RECHERCHIERTE SACHGEBIETE (Int. Cl.5) |
|---|---|
|  | B 60 R <br> B 60 N <br> H 01 H |

Der vorliegende Recherchenbericht wurde für alle Patentansprüche erstellt

| Recherchenort | Abschlußdatum der Recherche | Prüfer |
|---|---|---|
| Den Haag | 30 August 91 | DUBOIS B.F.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument